# EUROPEAN PATENT APPLICATION

(11) **EP 3 392 819 A1**
(43) Date of publication of application: **24.10.2018**
(21) Application number: 18166605.8
(22) Date of filing: 10.04.2018
(51) Int. Cl.: G06Q 30/02, G06Q 10/02, G06Q 10/10, G08G 1/14

(54) **PARKING MANAGEMENT SYSTEM, MOBILE TERMINAL AND PARKING MANAGEMENT METHOD**

(30) Priority: 17.04.2017 JP 2017081495
(71) Applicant: Toyota Jidosha Kabushiki Kaisha, Aichi-Ken 471-8571 (JP)
(72) Inventor: KOREISHI, Jun, Aichi-ken, 471-8571 (JP)
(74) Representative: J A Kemp

(57) **Abstract**

A parking management system (1) includes: a mobile terminal (20) including a user information storage unit (210), a first reception unit (211) configured to receive a signal including identification information of a parking section, a time identifying unit (213) configured to identify a specific time including at least one of a parking start time and a parking end time of a vehicle (30) based on a detection result from a sensor unit, and a transmission unit (214) configured to transmit parking information including the user information, the identification information, and the specific time; and a server (10) including a second reception unit (111) configured to receive the parking information from the mobile terminal (20), and a parking identifying unit (113) configured to identify a user of the vehicle (30), a parking position, and the specific time based on the received parking information.

## Description

### BACKGROUND OF THE INVENTION

### 1. Field of the Invention

The invention relates to a parking management system, a mobile terminal and a parking management method.

### 2. Description of Related Art

A computer system that manages parking of vehicles in a parking lot is known. Japanese Unexamined Patent Application Publication No. 2016-080423 (JP 20156-080523 A) discloses a technique of determining a parking position of a vehicle based on a beacon signal which has been received from a device installed in a parking lot by a mobile terminal. In order to perform management of parking, it is necessary to identify a parking start time and a parking end time of a vehicle.

### SUMMARY OF THE INVENTION

However, when it is intended to determine a parking start time or a parking end time of a vehicle based on a time at which a mobile terminal has received a beacon signal or a reception state of a signal, it is difficult to determine whether the vehicle is located in a parking lot because a beacon signal is transmitted over the area of the parking lot. Since a mobile terminal and a vehicle are not necessarily located at the same position, it is difficult to determine an accurate parking start time or an accurate parking end time.

The invention provides a technique by which a parking start time and a parking end time of a vehicle can be accurately identified.

A first aspect of the invention provides a parking management system. The parking management system according to the first aspect includes a mobile terminal and a server. The mobile terminal includes a user information storage unit configured to store user information, a first reception unit configured to receive a signal including identification information of a parking section from a device installed in the parking section, a time identifying unit configured to identify a specific time including at least one of a parking start time and a parking end time of a vehicle based on a detection result from a sensor unit, and a transmission unit configured to transmit parking information including the user information, the identification information, and the specific time to the server. The server includes a second reception unit configured to receive the parking information from the mobile terminal, and a parking identifying unit configured to identify a user of the vehicle, a parking position, and the specific time based on the received parking information.

In the first aspect, the time identifying unit may be configured to identify the specific time based on the detection result including vehicle information associated with whether the vehicle is moving.

In the first aspect, the sensor unit may include at least one of a vehicle speed sensor of the vehicle and a shift position sensor of the vehicle, and the time identifying unit may be configured to identify the specific time based on a detection result from at least one of the vehicle speed sensor and the shift position sensor.

In the first aspect, the sensor unit may include an acceleration sensor which is included in the mobile terminal, and the time identifying unit may be configured to identify the specific time based on at least a detection result from the acceleration sensor.

In the first aspect, the parking identifying unit may be configured to calculate a parking fee based on the specific time.

A second aspect of the invention provides a mobile terminal. The mobile terminal according to the second aspect includes: a user information storage unit configured to store user information; a reception unit configured to receive a signal including identification information of a parking section from a device installed in the parking section; and a time identifying unit configured to identify a specific time including at least one of a parking start time and a parking end time of a vehicle based on a detection result from a sensor unit.

In the second aspect, the time identifying unit may be configured to identify the specific time based on the detection result including vehicle information associated with whether the vehicle is moving.

In the second aspect, the sensor unit may include at least one of a vehicle speed sensor of the vehicle and a shift position sensor of the vehicle, and the time identifying unit may be configured to identify the specific time based on the detection result from at least one of the vehicle speed sensor and the shift position sensor.

In the second aspect, the sensor unit may include an acceleration sensor included in the mobile terminal, and the time identifying unit may be configured to identify the specific time based on at least a detection result from the acceleration sensor.

A third aspect of the invention provides a parking management method. The parking management method according to the third aspect includes: causing a mobile terminal configured to store user information to receive a signal including identification information of a parking section from a device installed in the parking section; and identifying a specific time including at least one of a parking start time and a parking end time of a vehicle based on a detection result from a sensor unit.

In the third aspect, the parking management method may further include causing the mobile terminal to transmit parking information including the user information, the identification information, and the specific time to a server, causing the server to receive the parking information from the mobile terminal, and causing the server to identify a user of the vehicle, a parking position, and the specific time based on the received parking information.

In the third aspect, identifying the specific time based on the detection result may include identifying the specific time based on the detection result including vehicle information associated with whether the vehicle is moving.

In the third aspect, identifying the specific time based on the detection result may include identifying the specific time based on a detection result from at least one of a vehicle speed sensor of the vehicle and a shift position sensor of the vehicle, the vehicle speed sensor and the shift position sensor being included in the sensor unit.

In the third aspect, identifying the specific time based on the detection result may include identifying the specific time based on at least a detection result from an acceleration sensor included in the mobile terminal.

According to the invention, it is possible to provide a technique by which a parking start time and a parking end time of a vehicle can be accurately identified.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating an example of a configuration of a parking management system according to an embodiment;
FIG. 2 is a diagram illustrating an example of a functional configuration of a mobile terminal according to the embodiment;
FIG. 3 is a diagram illustrating an example of parking sections according to the embodiment;
FIG. 4 is a diagram illustrating an example of a functional configuration of a server according to the embodiment;
FIG. 5 is a diagram illustrating an example of a process flow in the parking management system according to the embodiment;
FIG. 6 is a diagram illustrating an example of a process flow in the parking management system according to the embodiment;
FIG. 7 is a diagram illustrating an example of a process flow in the parking management system according to the embodiment;
FIG. 8 is a diagram illustrating an example of a process flow in the parking management system according to the embodiment;
FIG. 9 is a diagram illustrating an example of a process flow in the parking management system according to the embodiment;
FIG. 10 is a diagram illustrating an example of a process flow in the parking management system according to the embodiment;
FIG. 11 is a diagram illustrating an example of a process flow in the parking management system according to the embodiment;
FIG. 12 is a diagram illustrating an example of a process flow in the parking management system according to the embodiment;
FIG. 13 is a diagram illustrating an example of a process flow in the parking management system according to the embodiment; and
FIG. 14 is a diagram illustrating an example of a process flow in the parking management system according to the embodiment.

### DETAILED DESCRIPTION OF EMBODIMENTS

Hereinafter, embodiments of the invention will be described in detail with reference to the accompanying drawings. The scope of the invention is not limited to the embodiments.

### 1. Hardware configuration

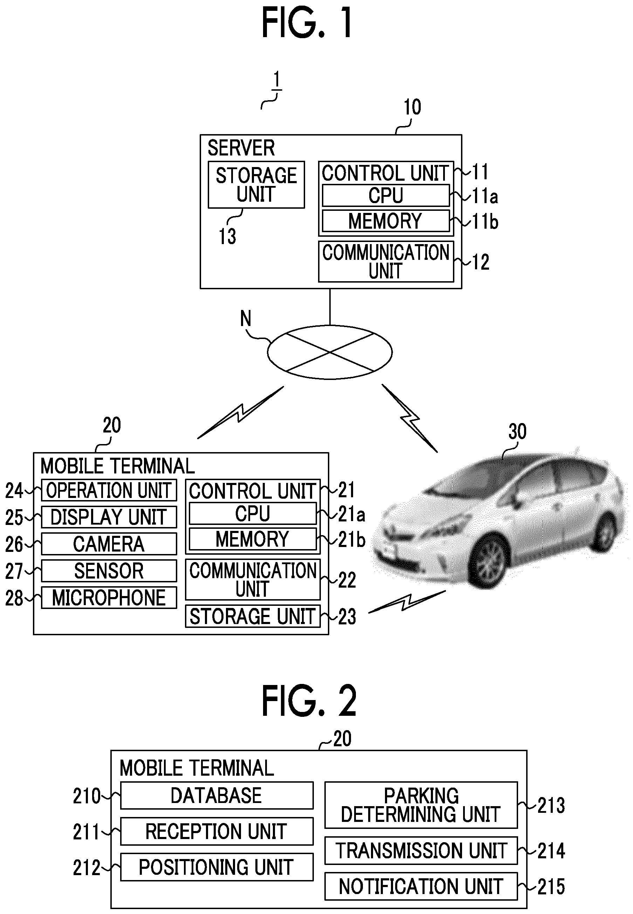

An example of a hardware configuration of a parking management system according to an embodiment will be described below with reference to FIG. 1. The parking management system 1 is a computer system for managing parking (entrance and exit) of a vehicle in a parking lot. The parking management system 1 mainly includes a server 10, a mobile terminal 20, and a vehicle 30. The mobile terminal 20 and the vehicle 30 can communicate with the server 10 via a network N. The mobile terminal 20 can communicate with the vehicle 30 (for example, using Bluetooth (registered trademark) or Wi-Fi (registered trademark)). The parking management system 1 can provide various services for managing parking of the vehicle 30 which is driven by a user carrying the mobile terminal 20 in a parking lot to the user and an owner of the parking lot. In FIG. 1, the parking management system 1 includes a single mobile terminal 20 and a single vehicle 30, but the parking management system 1 can include a plurality of mobile terminals 20 and a plurality of vehicles 30.

The network N is a communication line for transmitting and receiving information between the server 10, the mobile terminal 20, and the vehicle 30. The network N may be any one of, for example, the Internet, a packet communication network, a telephone line, another communication line, and a combination thereof, regardless of whether the network is wired or wireless (or a combination thereof).

The server 10 is constituted by an information processing device such as a dedicated or general-purpose computer. The server 10 may be constituted by a single information processing device or may be constituted by a plurality of information processing devices which are distributed over the network.

The server 10 mainly includes a control unit 11, a communication unit 12, and a storage unit 13. The control unit 11 mainly includes a central processing unit (CPU) 11a and a memory 11b. These elements will be described later. The server 10 functions as means for implementing various functions, for example, by causing the CPU 11a to execute a predetermined program stored in the memory 11b or the like. FIG. 1 illustrates only principal elements of the server 10, and the server 10 includes other elements which are included in a general information processing device.

The control unit 11 controls operations of various elements of the server 10 and controls execution of various processes. Details of an example of processes which are performed by the control unit 11 will be described later. The communication unit 12 is a communication interface for communication with an external device. The storage unit 13 is constituted by a storage device such as a hard disk. The storage unit 13 stores various programs or a variety of information which is required for performing processes in the server 10.

The mobile terminal 20 is a mobile information processing device (a mobile terminal device) such as a mobile phone (including smartphones), a tablet terminal, a personal digital assistant (PDA), a navigation device, or a personal computer. The mobile terminal 20 mainly includes a control unit 21, a communication unit 22, a storage unit 23, an operation unit 24, a display unit 25, a camera 26, a sensor 27, and a microphone 28. The control unit 21 mainly includes a CPU 21a and a memory 21b. The mobile terminal 20 functions as means for implementing various functions, for example, by causing the CPU 21a to execute a predetermined program stored in the memory 21b or the like.

The control unit 21 controls operations of various elements of the mobile terminal 20 and controls execution of various processes. Details of an example of processes which are performed by the control unit 21 will be described later. The communication unit 22 is a communication interface for communication with an external device. The storage unit 23 is constituted by a storage device such as a semiconductor memory. The storage unit 23 stores various programs or a variety of information which is required for performing processes in the mobile terminal 20. The operation unit 24 is a user interface for receiving an operation instruction from a user. The display unit 25 is a user interface for displaying process results in the mobile terminal 20. The camera 26 is a device that can take a still image or a moving image.

The sensor 27 includes various sensors. The sensor 27 includes, for example, a gyro sensor, an acceleration sensor, a geomagnetic sensor, a sound sensor, and/or an image sensor. The microphone 28 is a device that acquires sound information by converting speech/sound uttered by a user carrying the mobile terminal 20 into an electrical signal.

The vehicle 30 is an arbitrary vehicle that can be parked in a parking lot. The vehicle 30 is driven by a user of the mobile terminal 20. The vehicle 30 includes the same hardware elements as the control unit 21, the communication unit 22, the storage unit 23, the operation unit 24, the display unit 25, the camera 26, and the sensor 27 illustrated in FIG. 1 as the hardware elements of the mobile terminal 20. Such a configuration of the vehicle 30 can be identified as an on-board terminal. The vehicle 30 further includes elements which are included in a general vehicle.

As described above, in this embodiment, the parking management system 1 includes the server 10, the mobile terminal 20, and the vehicle 30, but is not limited thereto and may include an arbitrary device. A configuration including some of the elements of the server 10, the mobile terminal 20, and the vehicle 30 can be understood as the parking management system 1.

### 2. Functional configuration

An example of functional configurations of the devices which are included in the parking management system according to the embodiment will be described below. First, the functional configuration of the mobile terminal 20 will be described with reference to FIG. 2. The mobile terminal 20 includes a database 210, a reception unit 211, a positioning unit 212, a parking determining unit 213, a transmission unit 214, and a notification unit 215 as main functional elements. The mobile terminal 20 implements the functional elements illustrated in FIG. 2, for example, by causing the CPU 21a to execute a predetermined program stored in the memory 21b or the like and to cooperate with hardware of the mobile terminal 20. Details of the functional elements will be described below.

The database 210 stores a variety of information such as information required for processes which are performed by the mobile terminal 20 and information generated through the processes. The database 210 stores, for example, user information such as a user ID of the mobile terminal 20 or data of application programs installed in the mobile terminal 20.

The reception unit 211 receives a variety of information from an external device outside the mobile terminal 20. For example, the reception unit 211 can receive a variety of information such as a time period in which the user of the mobile terminal 20 parks the vehicle 30 in a parking lot, information of a parking fee, and a notification associated with the parking from the server 10.

The reception unit 211 can receive a signal from a device which is installed in correlation with each parking section of the parking lot via the communication unit 22, and acquire identification information of the parking section included in the received signal. For example, a beacon terminal is installed in each parking section of the parking lot, and the reception unit 211 can receive a beacon signal emitted from the beacon terminal and acquire identification information of the parking section included in the beacon signal.

Here, the beacon terminal is a device that continuously emits a signal of broadcast communication (a beacon signal). A range which the beacon signal reaches is referred to as a beacon range. The area of the beacon range generally has a radius of about several m to several tens of m.

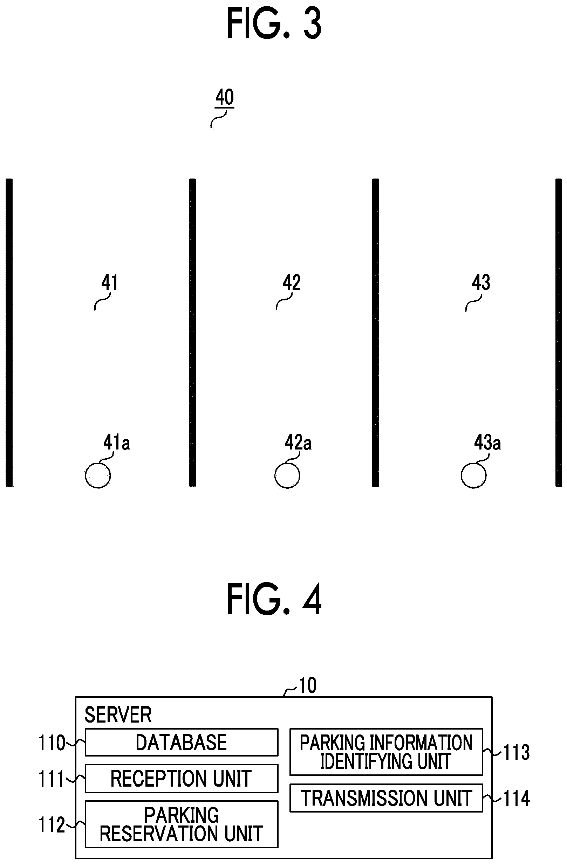

An example in which a signal is emitted from a device installed in each parking section of a parking lot will be described below with reference to FIG. 3. In FIG. 3, a parking lot 40 is illustrated. The parking lot 40 includes parking sections 41, 42, and 43. Beacon terminals 41a, 42a, and 43a are installed in correlation with the parking sections. Beacon signals including identification information of the parking sections in which the beacon terminals are installed are emitted from the beacon terminals 41a, 42a, and 43a. For example, the reception unit 211 of the mobile terminal 20 which is carried by a driver (a user) who causes the vehicle 30 to enter the parking section 41 receives a beacon signal including identification information of the parking section 41 from the beacon terminal 41a.

In the example illustrated in FIG. 3, the beacon terminals 41a, 42a, and 43a are installed in correlation with the parking sections, but may be installed using an arbitrary method. For example, the beacon terminals 41a, 42a, and 43a may be installed directly in the parking sections, or may be installed in support members such as pylons or poles installed in the parking sections. The example illustrated in FIG. 3 employs a configuration in which a beacon terminal is installed for each parking section, but the invention is not limited to this example. For example, a configuration in which one or more beacon terminals are installed in a parking lot and an ID for identifying the parking lot is emitted from the beacon terminal instead of an ID for identifying a parking section may be employed.

In the example, the beacon terminal that emits a beacon signal is used as the device that is installed in correlation with each parking section to emit a signal, but the invention is not limited to the example. Instead of the beacon terminal, an arbitrary signal emitting device such as a radio frequency (RF) tag that emits radio waves (signals) including identification information of a parking section or a transmitter that emits a signal including identification information using infrared light may be installed.

Referring back to FIG. 2, the positioning unit 212 performs a process of identifying a position (for example, latitude and longitude) of the mobile terminal 20 (a host device) based on signals received from Global Positioning System (GPS) satellites or a communication device (for example, a base station) by the mobile terminal 20 and identifying a time at which the position has been identified (that is, identifies the positioning information).

The parking determining unit 213 can determine a start of parking and an end of parking of the vehicle 30 in the parking lot 40. For example, the parking determining unit 213 can determine the start of parking and the end of parking of the vehicle 30 in the parking lot 40 based on the position of the mobile terminal 20 identified by the positioning unit 212 and the sensing results from the sensor 27. The parking determining unit 213 can identify a time at which the vehicle 30 starts parking (a parking start time) and a time at which the vehicle 30 ends parking (a parking end time) based on the determination results of the start of parking and the end of parking of the vehicle 30.

The parking determining unit 213 can determine in which state (for example, which of stopping, onboard (moving in a vehicle), walking (a user is moving on foot), or another state (for example, moving in a subway)) the mobile terminal 20 (or the user of the mobile terminal 20) is, based on the detection results from the sensor 27. The parking determining unit 213 can more accurately perform the parking determination by determining the start of parking and/or the end of parking of the vehicle 30 using information of the determined state.

For example, when the position of the mobile terminal 20 identified by the positioning unit 212 is in the parking lot 40 and the sensor 27 has detected that a user state of the mobile terminal 20 has been changed from an onboard (moving in a vehicle) state to a not onboard state, the parking determining unit 213 can determine that parking of the vehicle 30 has started. When the position of the mobile terminal 20 identified by the positioning unit 212 is in the parking lot 40 and the sensor 27 senses that the user state of the mobile terminal 20 has changed from a not onboard state to an onboard (moving in a vehicle) state, the parking determining unit 213 can determine that parking of the vehicle 30 has ended.

Here, the determination of in which state of stopped, onboard (moving in a vehicle), walking (moving on foot), and another state (for example, moving in a subway) the user of the mobile terminal 20 is, based on the detection results from the sensor 27 can be performed by an arbitrary method. For example, when the user state is stopped, onboard, walking, and traveling, features are calculated based on the detection results from the acceleration sensor and the geomagnetic sensor which are mounted in the mobile terminal, and the user states and the features are correlated with each other by machine learning. The parking determining unit 213 can determine the state of the user of the mobile terminal 20 based on the correlated information and the detection results from the sensor 27.

The parking determining unit 213 can determine the start of parking and the end of parking of the vehicle 30 in the parking lot 40 based on a vehicle signal (a vehicle signal indicating the detection results from the vehicle sensor of the vehicle 30) received from the vehicle 30. The vehicle sensor of the vehicle 30 may include at least one of a vehicle speed sensor of the vehicle 30 and a shift position sensor of the vehicle 30.

For example, the parking determining unit 213 can identify a parking start time and a parking end time based on the type of the vehicle signal received from the vehicle 30 and a reception time thereof. The vehicle signal includes, for example, an AT (automatic) shift signal, a vehicle speed signal, an ignition (IG) signal, and/or an ACC signal (an accessory signal). The parking determining unit 213 can identify the parking start time based on a time at which a shift signal indicating parking is received and can specify the parking end time based on a time at which the vehicle speed signal indicates change from 0 km/h to equal to or higher than 0 km/h.

As described above, according to the embodiment, the parking determining unit 213 can identify a parking start time and a parking end time of the vehicle 30 based on the detection results from the sensor unit (the sensor 27 of the mobile terminal 20 or the vehicle sensor of the vehicle 30).

Here, a method of identifying the parking start time and the parking end time of the vehicle 30 based on a time at which the reception unit 211 has acquired identification information of a parking section included in the beacon signal emitted from a device (for example, a beacon terminal) installed in the parking section and a time at which the beacon signal is not received can be considered. However, the beacon signal is transmitted over the area of the parking lot and the mobile terminal 20 and the vehicle 30 are not necessarily located at the same position. Accordingly, it is difficult to determine an accurate parking start time or an accurate parking end time based on only the signal received by the reception unit 211.

Accordingly, as in this embodiment, it is possible to more accurately identify a parking start time and a parking end time by causing the parking determining unit 213 to identify the parking start time and the parking end time of the vehicle 30 based on the detection results from the sensor unit (the sensor 27 of the mobile terminal 20 or the vehicle sensor of the vehicle 30).

The transmission unit 214 transmits information of the processing results in the mobile terminal 20, information stored in the mobile terminal 20, and instruction information based on a user's operation to the outside. For example, the transmission unit 214 can transmit the user information of the mobile terminal 20 stored in the database 210, identification information of a parking section acquired by the reception unit 211 (that is, identification information of a parking section included in a signal received from the device installed in correlation with each parking section of the parking lot via the communication unit 22), and information including the parking start time or the parking end time identified by the parking determining unit 213 as parking information to the server 10.

The transmission unit 214 can transmit the user information and the identification information of the parking section at a time corresponding to the user's operation (for example, pushing of a parking start button or a parking end button) and can transmit the parking start time or the parking end time at a time identified by the parking determining unit 213. The transmission unit 214 may transmit the user information, the identification information of the parking section, and the parking start time or the parking end time to the server 10 at the same time.

The transmission unit 214 can transmit parking reservation information to the server 10 in response to an input from a user. The parking reservation information is information of a parking reservation request for a parking lot (a parking section).

The notification unit 215 gives a variety of notifications to the user of the mobile terminal 20. For example, when identification information correlated with the parking section is not read by the reception unit 211 even if a predetermined time (for example, 10 minutes) has elapsed after the parking determining unit 213 has determined that parking of the vehicle 30 has started, the notification unit 215 can give a notification to the user. The notification unit 215 can present (give) a notification received from the server 10 to the user.

The notification unit 215 can give a notification using an arbitrary method. For example, notification contents may be displayed on the display unit 25, a notification may be given by a speaker (not illustrated) included in the mobile terminal 20, or a notification may be given by causing the mobile terminal 20 to vibrate. A notification may be given by combining all or some of the above-mentioned notification methods.

As described above, according to the embodiment, the mobile terminal 20 can read identification information of a parking section using the reception unit 211, and can transmit information including the user information of the mobile terminal 20 stored in the database 210, the read identification information of the parking section, and the parking start time or the parking end time as parking information to the server 10 using the transmission unit 214. As a result, it is possible to transmit information required for parking management of a parked vehicle to the server 10 without installing a device such as a camera in the parking lot 40 to recognize a parked vehicle. That is, according to the embodiment, it is possible to implement parking management of a vehicle at a lower cost.

The functional configuration of the server 10 will be described below with reference to FIG. 4. The server 10 includes a database 110, a reception unit 111, a parking reservation unit 112, a parking information identifying unit 113, and a transmission unit 114 as main functional elements. The server 10 implements the functional elements illustrated in FIG. 4, for example, by causing the CPU 11a to execute a predetermined program stored in the memory 11b or the like and cooperating with hardware of the server 10. Details of the functional elements will be described below.

The database 110 stores a variety of information such as information required for processes which are performed by the server 10, information generated through the processes, and information received from an external device. The database 110 stores, for example, information of registered users, information of registered parking lots, information of parking reservation of a user, information of parking fees, and information of use of a parking lot.

The reception unit 111 receives a variety of information and execution commands of various processes from an external device outside the server 10. For example, the reception unit 111 receives the parking reservation information and the parking information (which includes, for example, user information of the mobile terminal 20, parking position information, parking start information (a parking start instruction), and parking end information (a parking end instruction)) transmitted from the transmission unit 214 of the mobile terminal 20. The parking start information (the parking start instruction) includes the parking start time identified by the parking determining unit 213, and the parking end information (the parking end instruction) includes the parking end time identified by the parking determining unit 213.

The parking reservation unit 112 performs a process of registering the parking reservation information received via the reception unit 111 in the database 110 and a process of updating and deleting the registered parking reservation information. Examples of the parking reservation information which is registered and updated in the database 110 include user (subscriber) information, information on parking lots (parking sections) for which parking has been reserved, a reservation start time (a reserved time for start of parking), a reservation end time (a reserved time for end of parking), a parking fee, a parking state (for example, one of not parked, parked, and parking ended), a parking start time (a time at which parking is actually started), and a parking end time (a time at which parking is actually ended).

The parking information identifying unit 113 identifies information of parking of the vehicle 30 and other vehicles in the parking lot (the parking section) as parking information based on the information received by the reception unit 111. For example, the parking information identifying unit 113 can identify the user of the mobile terminal 20, the parking position of the parked vehicle 30 (the parking section in which the vehicle 30 is parked), and at least one of the parking start time and the parking end time based on the parking information transmitted from the mobile terminal 20 and received by the reception unit 111. The identified parking information of the vehicle is stored in the database 110 in correlation with the user information of the vehicle.

The parking information identifying unit 113 determines whether the identified parking information matches details indicated by the parking reservation information registered in the database 110. For example, the parking information identifying unit 113 can determine (identify) whether the user information, the parking position (the parking section), and the parking start time which are indicated by the identified parking information matches details indicated by the parking reservation information registered in the database 110.

As described above, according to the embodiment, the parking management system 1 can identify a difference between details of a registered reservation for a parking lot and an actual parking situation.

The parking information identifying unit 113 can identify a parking time of the vehicle 30 based on the parking start information and the parking end information transmitted from the mobile terminal 20 and received by the reception unit 111. The parking information identifying unit 113 can calculate a parking fee of the vehicle 30 based on the parking time of the vehicle 30 and unit parking fee information. The unit parking fee information is acquired, for example, from the database 110.

The transmission unit 114 transmits information of the processing results in the server 10 and the information stored in the server 10 to the outside. For example, the transmission unit 114 transmits the parking information of the vehicle 30 identified by the parking information identifying unit 113 and the information of the calculated parking fee to the mobile terminal 20. The transmission unit 114 transmits various notifications (messages) to an external device. For example, when it is determined that the parking information identified by the parking information identifying unit 113 does not match the details indicated by the parking reservation information registered in the database 110, the transmission unit 114 notifies the corresponding mobile terminal 20 that the parking is not reserved parking (transmits not reserved parking notification). Examples of a notification transmitted from the transmission unit 114 to the mobile terminal 20 will be listed below.

### Examples of notification

(1) Notification 1 when a parking lot which has not been reserved is used
   Notification conditions: Parking start information not matching reservation details (or even if not reserved) has been received from the mobile terminal 20 and a parking section indicated by details of a parking start instruction thereof is currently outside of a reserved time or is currently reserved by another user.
   Notification details: "Parking in a not reserved parking lot. Since this parking lot is not currently available, please move. Place: "parking lot name"
(2) Notification 2 when a parking lot which has not been reserved is used
   Notification conditions: Parking start information not matching reservation details (or even if not reserved) has been received from the mobile terminal 20 and a parking section indicated by details of a parking start instruction thereof is currently outside of a reserved time or is not currently reserved by another user.
   Notification details: "Parking in a not reserved parking lot. Please move or reserve the parking lot. Place: "parking lot name"
(3) Notification of start of parking
   Notification conditions: Parking start information matching reservation details has been received from the mobile terminal 20.
   Notification details: "Parking has been started. Place: "parking lot name, Start of reservation: XX:XX, End of reservation: XX:XX, Reservation fee: XXX yen"
(3a) Notification of start of parking before reserved time
   Notification conditions: A parking start instruction has been received within a reserved time by the reception unit 111, but the parking start time is before the reserved time.
   Notification details: "Parking has been started. Because of parking before the reserved time, an additional fee is charged. Place: "parking lot name, Start of reservation: XX:XX
   End of reservation: XX:XX, Reservation fee: XXX yen, Start of parking: XX:XX Additional fee: xxx yen"
(3b) Notification for promoting operation of pressing parking start button
   Notification conditions: A parking start time (identified by the parking determining unit 213) has been received by the reception unit 111, but a parking start instruction based on a user's operation of the mobile terminal 20 has not been received even if a predetermined time has elapsed thereafter.
   Notification details: "Reserved parking lot has been entered. Please press the parking start button."
(3c) Notification for promoting operation of pressing parking end button
   Notification conditions: A parking end time (identified by the parking determining unit 213) has received by the reception unit 111, but a parking end instruction based on a user operation of the mobile terminal 20 has not been received even if a predetermined time has elapsed thereafter.
   Notification details: "Reserved parking lot has been left. Please press the parking end button."
(4) Notification of start of parking before reserved time (In available time)
   Notification conditions: A parking start instruction has been received before a reserved time by the reception unit 111, the parking start time is within the reserved time, and the parking lot is not currently reserved by another user.
   Notification details: "Parking has been started before the reserved time. Since it is an available time, please update the reservation. Place: "parking lot name, Start of reservation: XX:XX, End of reservation: XX:XX, Reservation fee: XXX yen"
(5) Notification of start of parking before reserved time (In unavailable time)
   Notification conditions: A parking start instruction has been received before a reserved time by the reception unit 111, and the parking start time is outside of the reserved time or the parking lot is currently reserved by another user.
   Notification details: "Parking has been started before the reserved time. Since it is an unavailable time, please move. Place: "parking lot name, Start of reservation: XX:XX End of reservation: XX:XX, Reservation fee: XXX yen"
(6) Notification 1 of approaching parking end time
   Notification conditions: It is determined that it is a predetermined time before the parking end time during parking, the parking start time is within the reserved time, and the parking lot is not currently reserved by another user.
   Notification details: "A reservation end time is coming soon. Please update the reservation when the end time is exceeded. An additional fee of XXX yen is charged every OO minutes. Place: "parking lot name, Start of reservation: XX:XX, End of reservation: XX:XX, Reservation fee: XXX yen"
(7) Notification 2 of approaching parking end time
   Notification conditions: It is determined that it is a predetermined time before the parking end time during parking, and the parking lot is outside of the reserved time or is currently reserved by another user after the end of reservation.
   Notification details: "A reservation end time is coming soon. Please use within the reserved time. Place: "parking lot name", Start of reservation: XX:XX, End of reservation: XX:XX, Reservation fee: XXX yen"
(8) Notification of exceeding parking time
   Notification conditions: It is determined that the vehicle is parked after a reserved time, it is within the reserved time, and the parking lot is not currently reserved by another user.
   Notification details: "A reserved time has been exceeded. An additional fee of XXX yen will be charged for every OO minutes. Place: "parking lot name, Start of reservation: XX:XX, End of reservation: XX:XX, Reservation fee: XXX yen"
(9) Notification of exceeding parking time and promoting movement
   Notification conditions: It is determined that the vehicle is parked after the reserved time, it is outside of the reserved time, and the parking lot is currently reserved by another user.
   Notification details: "The reserved time has been exceeded. Please move rapidly because this is an unavailable time. Place: "parking lot name, Start of reservation: XX:XX, End of reservation: XX:XX, Reservation fee: XXX yen"
(10) Notification of end of parking (end within reserved time)
   Notification conditions: A parking end instruction has been received within the reserved time.
   Notification details: "Parking has ended. There is no additional fee. Place: "parking lot name, Start of reservation: XX:XX, End of reservation: XX:XX, Reservation fee: XXX yen, Start of parking: xx:xx, End of parking: xx:xx, Charged fee: xxx yen"
(11) Notification of end of parking (end after reserved time)
   Notification conditions: A parking end instruction has been received after the reserved time.
   Notification details: "Parking has ended. An additional fee is XXX yen. Place: "parking lot name, Start of reservation: XX:XX, End of reservation: XX:XX, Reservation fee: XXX yen, Start of parking: xx:xx, End of parking: xx:xx, Charged fee: xxx yen"
(12) Notification of parking lot other than that for parking start time
   Notification conditions: A parking end instruction has been received in a parking lot which has not been reserved.
   Notification details: "The parking lot is not the parking lot for parking. Please confirm once more. Place: "parking lot name."

### 3. Embodiments

A process flow in a specific embodiment of the parking management system 1 will be described below. The same processes as described above will be omitted or only summaries thereof will be described.

### 3.1 Embodiment 1

Embodiment 1 is an embodiment in which the parking management system 1 is applied to a reservation type parking lot in which a user can reserve a parking lot which the user desires to use (park) at a desired time.

### Embodiment 1.1

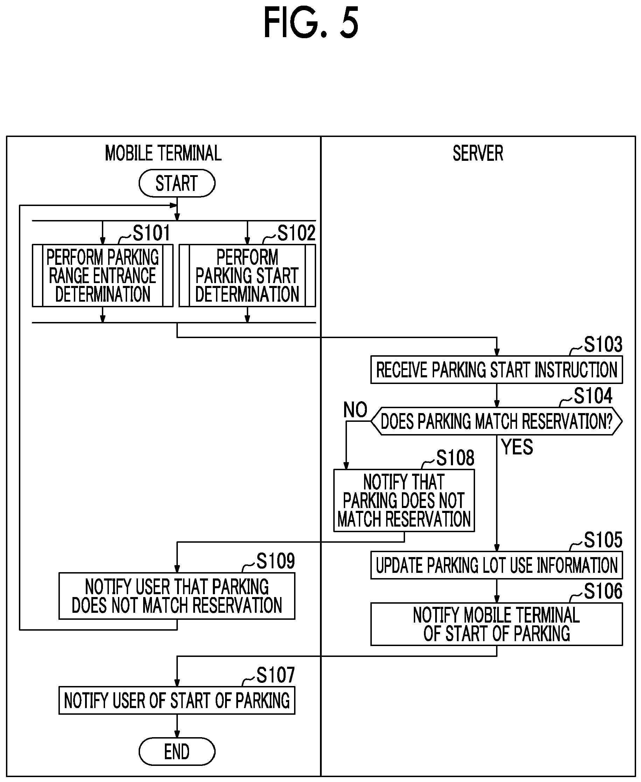

An embodiment of a routine of determining start of parking of a vehicle 30 in a parking section of a parking lot 40 which has been reserved by a user of a mobile terminal 20 will be described below with reference to FIGS. 5 to 9. In FIGS. 5 to 9, process steps in an area indicated by "mobile terminal" are process steps which are performed by the mobile terminal 20, and process steps in an area indicated by "server" are process steps which are performed by the server 10. The same is true of other flowcharts.

First, the routine illustrated in the flowchart of FIG. 5 will be described. This routine is started after the user of the mobile terminal 20 has reserved one parking section of the parking lot 40 to park the vehicle 30.

The mobile terminal 20 performs a parking range entrance determination (Step S101) process of determining whether the vehicle 30 has entered a parking section and a parking start determination (Step S102) process of determining whether parking of the vehicle 30 has been started.

### Parking range entrance determination

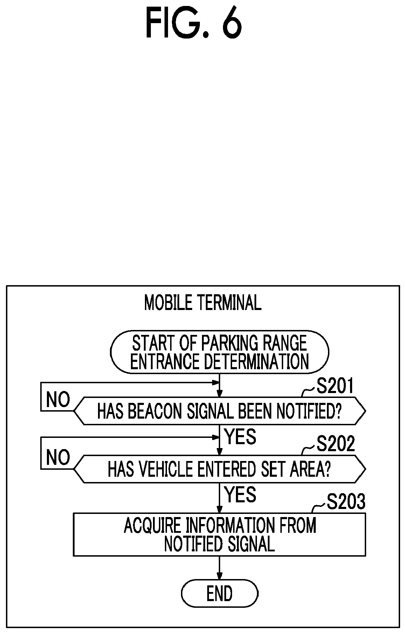

The parking range entrance determination (Step S101) process illustrated in FIG. 5 will be described below with reference to FIG. 6. First, the mobile terminal 20 determines whether a beacon signal has been received from one of the beacon terminals 41a, 42a, and 43a via the communication unit 22 (Step S201). Specifically, the mobile terminal 20 determines whether a service identifier of the parking lot 40 included commonly in the beacon signals from the beacon terminals 41a, 42a, and 43a has been detected. That is, in the process of Step S201, it is determined whether the vehicle 30 which is driven by a user carrying the mobile terminal 20 enters the parking lot 40.

When it is determined that the vehicle has entered the parking lot (YES in Step S201), the mobile terminal 20 determines whether the mobile terminal is within a preset distance (in a set area) from the beacon terminal based on radio wave intensity of the received beacon signal (Step S202). The set area which is within a preset distance from the beacon terminal and which is used in the determination of Step S202 is ideally set to include the parking section in which the beacon terminal is installed and not to include another parking section. That is, in Step S201, it is determined whether the mobile terminal 20 has entered the parking section.

When it is determined in Step S202 that the host vehicle has entered the set area (YES in Step S202), the mobile terminal 20 acquires the identification information of the parking section (the identification information of the parking section 41 when the beacon signal has been received from the beacon terminal 41a) from the received beacon signal (Step S203) and ends the parking range entrance determination process.

### Parking start determination

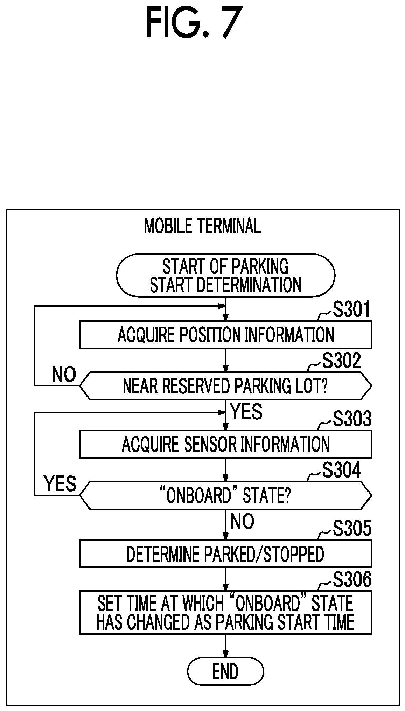

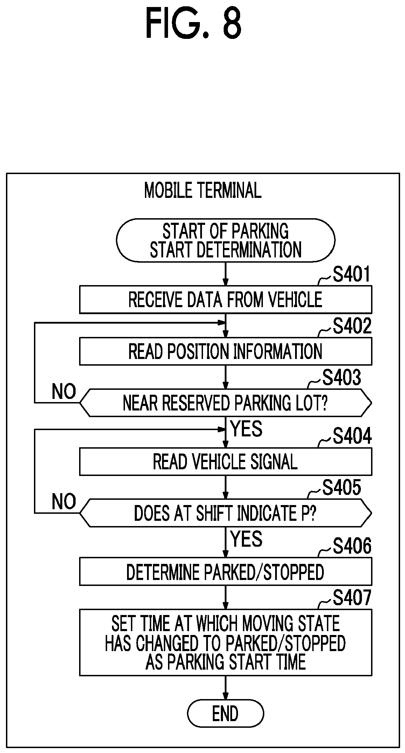

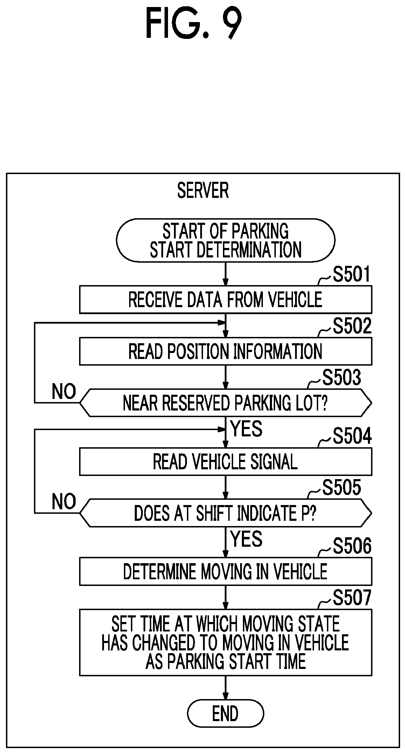

An embodiment of the parking start determination (Step S102) process illustrated in FIG. 5 will be described below with reference to FIGS. 7 to 9. FIG. 7 illustrates a process flow when the process is performed by the mobile terminal 20, FIG. 8 illustrates a process flow when the process is performed by the mobile terminal 20 and the vehicle 30, and FIG. 9 illustrates a process flow when the process is performed by the server 10 and the vehicle 30. In the parking start determination (Step S102) process illustrated in FIG. 5, for example, the process flow illustrated in one of FIGS. 7 to 9 is performed.

The parking start determination process illustrated in FIG. 7 will be described below. First, the mobile terminal 20 of a user who has boarded the vehicle 30 acquires position information of the host device (Step S301), and determines whether a current position is near a parking lot reserved by the user of the mobile terminal 20 (for example, within 30 m) (Step S302). The information of the parking lot reserved by the user is acquired from the database 110 of the server 10 via the network N.

When it is determined that the current position is near the parking lot (YES in Step S302), the mobile terminal 20 acquires information sensed by the sensor 27 (sensor information) (Step S303), and determines whether a moving state of the user identified based on the sensor information is "onboard" (moving in a vehicle) (Step S304). The method of identifying the user state based on the sensor information is the same as described above.

When it is determined that the moving state is a state other than "onboard" (that is, the moving state at the time points of S301 and S302 was "onboard" but has been changed to another state thereafter) (NO in Step S304), the mobile terminal 20 determines that the vehicle 30 is being parked/stopped (Step S305). Thereafter, the mobile terminal 20 sets the time at which it has been determined in Step S304 that "onboard" has changed to another state as the parking start time (Step S306). Thereafter, the process flow illustrated in FIG. 7 ends.

As described above, according to the process flow illustrated in FIG. 7, when the current position is near the parking lot reserved by the user of the mobile terminal 20, the mobile terminal 20 sets the time at which it is determined that "onboard" has changed to another state based on the sensor information from the sensor 27 as the parking start time. As a result, it is possible to more accurately identify the parking start time.

The parking start determination process illustrated in FIG. 8 will be described below. First, data including position information and a vehicle signal of the vehicle 30 is received from the onboard terminal of the vehicle 30 (Step S401). The onboard terminal is a configuration included in the vehicle 30 and has, for example, the same configuration as the mobile terminal 20 and other configurations. The position information of the vehicle 30 is identified by the positioning function of the vehicle 30. The vehicle signal includes, for example, an automatic (AT) shift signal, a vehicle speed signal, an ignition (IG) signal, and/or an ACC signal (an accessory signal).

Then, the mobile terminal 20 reads the position information of the vehicle 30 from the data received in Step S401 (Step S402) and determines whether the current position of the vehicle 30 is near (for example, within 30 m) of a parking lot which has been reserved by the user of the mobile terminal 20 (Step S403). The information of the parking lot which has been reserved by the user is acquired from the database 110 of the server 10 via the network N.

When the current position is near the parking lot (YES in Step S403), the mobile terminal 20 reads the vehicle signal from the data received in Step S401 (Step S404) and determines whether the AT shift signal indicates parking (P) (Step S405). When the AT shift signal indicates parking (YES in Step S405), the mobile terminal 20 determines that the vehicle 30 is being parked/stopped in the parking lot (Step S406).

When the vehicle signal read in Step S404 includes the AT shift signal, the IG signal, or the vehicle speed signal, it is determined in Step S405 whether the AT shift signal indicates parking (P), whether the IG signal indicates OFF, or whether the vehicle speed signal indicates zero. When the determination result is YES, it is determined in Step S406 that the vehicle 30 is being parked/stopped in the parking lot.

Thereafter, the mobile terminal 20 sets the time at which YES has been determined in Step S405 as the parking start time in the parking lot (Step S407) and then the process flow illustrated in FIG. 8 ends.

As described above, according to the process flow illustrated in FIG. 8, the parking management system 1 can identify information of a position of a parking lot (a parking section) in which the vehicle 30 has been parked and the parking start time without installing a high-cost device such as a camera in the parking lot to recognize a parked vehicle. As a result, it is possible to implement parking management at a low cost using the information.

According to the process flow illustrated in FIG. 8, the parking start time in the parking lot is identified using the vehicle signals transmitted from the vehicle 30. Vehicle signals such as the automatic (AT) shift signal, the vehicle speed signal, the ignition (IG) signal, and the ACC signal (accessory signal) are automatically transmitted depending on the vehicle state. Accordingly, according to the process flow illustrated in FIG. 8, it is possible to more accurately identify the parking start time in comparison with a case in which the user manually designates the parking start time.

The parking start determination process illustrated in FIG. 9 will be described below. The processes of Steps S501 to S507 are the same as Steps S401 to S407 which are performed by the mobile terminal 20 and which are illustrated in FIG. 8. Accordingly, the process flow illustrated in FIG. 9 will not be repeated.

Subsequent description with reference to FIG. 5 will be made below. After Steps S101 and S102, a parking start instruction along with the identification information of the parking section acquired in Step S101, the parking start time set in Step S102, and the user information of the mobile terminal 20 is transmitted from the mobile terminal 20 to the server 10. The server 10 receives the parking start instruction from the mobile terminal 20 (Step S103).

The server 10 determines whether details of parking which is started by the vehicle 30 match details of a parking reservation based on the information received along with the instruction and the parking reservation information stored in the database 110 (Step S104). For example, when the details of parking which is started by the vehicle and the details of the parking reservation are different from each other in a parking place (a parking section) or a parking time (for example, the parking is started outside of the reserved parking time), the server 10 determines that the details of parking which is started by the vehicle 30 do not match the details of the parking reservation.

When it is determined in Step S104 that the parking does not match the details of the parking reservation (NO in Step S104), the server 10 notifies the mobile terminal 20 that the parking does not match the details of the parking reservation (Step S108), and the mobile terminal 20 presents the received notification to the user (S109). For example, one of Notification examples (1), (2), (4), and (5) is presented via the display unit 25. Thereafter, the process flow transitions to Steps S101 and S102.

When it is determined in Step S104 that the parking matches the details of the parking reservation (YES in Step S104), the server 10 updates parking lot use information stored in the database 110 (Step S105). Specifically, the identification information of the parking section is identified as the parking position, the time at which the identification information is read is identified as the parking start time, and the user information of the mobile terminal 20 is identified as information of the user who has parked the vehicle. In this way, the parking lot use information is updated.

Thereafter, the server 10 notifies the mobile terminal 20 of start of parking (Step S106). The mobile terminal 20 gives a notification to the user by displaying the notification (for example, Notification example (3)) on the display unit 25 or the like (Step S107), and the process flow illustrated in FIG. 5 ends.

As described above, according to the process flow illustrated in FIG. 5, the parking management system 1 can identify a difference between the details of the registered reservation for the parking lot and the actual parking situation and notify the user of the difference (that is, that the parking does match details of the reservation).

According to the process flow illustrated in FIG. 5, the parking management system 1 can identify information of a position of a parking lot (a parking section) in which the vehicle 30 has been parked and the parking start time without installing a high-cost device such as a camera in the parking lot to recognize a parked vehicle and can perform parking management using the information. That is, according to the embodiment, it is possible to perform parking management of a vehicle at a lower cost.

### Embodiment 1.2

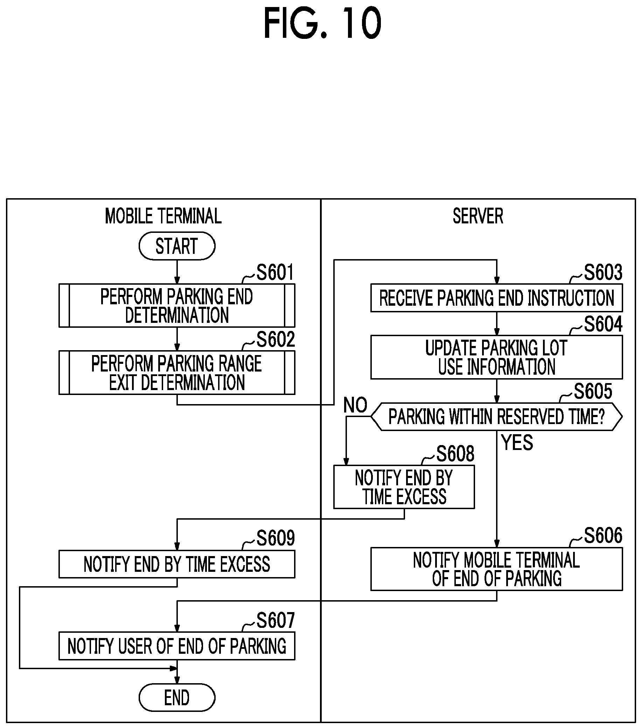

An embodiment of process flow of determining whether parking of the vehicle 30 in a parking section of a parking lot 40 by the user of the mobile terminal 20 has ended will be described below with reference to the flowcharts illustrated in FIGS. 10 to 14.

First, the process flow illustrated in the flowchart of FIG. 10 will be described. This process flow is started when the user of the mobile terminal 20 in the area of the parking lot 40 intends to end parking of the vehicle 30 (to causes the vehicle 30 to leave the area).

The mobile terminal 20 performs a parking end determination (Step S601) process of determining whether the vehicle 30 has ended parking and a parking range exit determination (Step S602) process of determining whether the vehicle 30 has exited from a parking section.

### Parking range exit determination

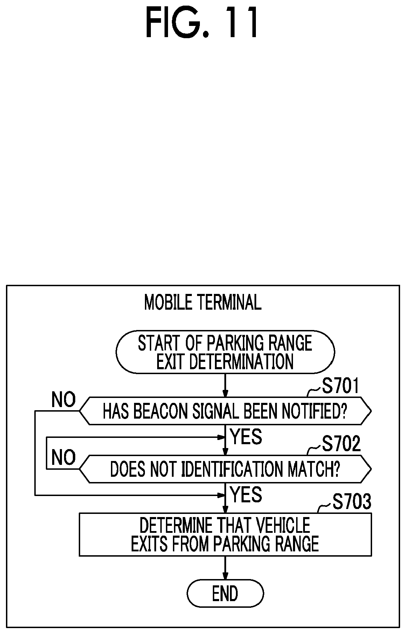

An example of the parking range exit determination (Step S602) process illustrated in FIG. 10 will be described below with reference to FIG. 11. First, the mobile terminal 20 determines whether a beacon signal has been received from one of the beacon terminals 41a, 42a, and 43a installed in the parking lot 40 via the communication unit 22 (Step S701). Specifically, the mobile terminal 20 determines whether a service identifier of the parking lot 40 commonly included in the beacon signals from the beacons terminals 41a, 42a, and 43a has been detected. When it is determined that the service identifier has not been detected (NO in Step S701), the process flow transitions to Step S703.

When it is determined that the service identifier has been detected (YES in Step S701), the mobile terminal 20 determines whether the identification information of a parking section (for example, the identification information of the parking section 41 when the beacon signal has been received from the beacon terminal 41a) included in the beacon signal received from the beacon terminal matches the identification information of the parking section (or the parking section for which parking of the vehicle 30 has been registered) for which parking has been reserved by the user of the mobile terminal 20 (Step S702). The information of the parking section for which parking has been reserved by the user (or the parking section for which parking of the vehicle 30 has been registered) is acquired from the database 110 of the server 10 via the network N. When it is determined in Step S702 that both pieces of identification information do not match each other (YES in Step S702), the process flow transitions to Step S703.

In Step S703, the mobile terminal 20 has exited from the parking section in which the vehicle 30 has been parked, and the parking range exit determination process illustrated in FIG. 11 ends.

### Parking end determination

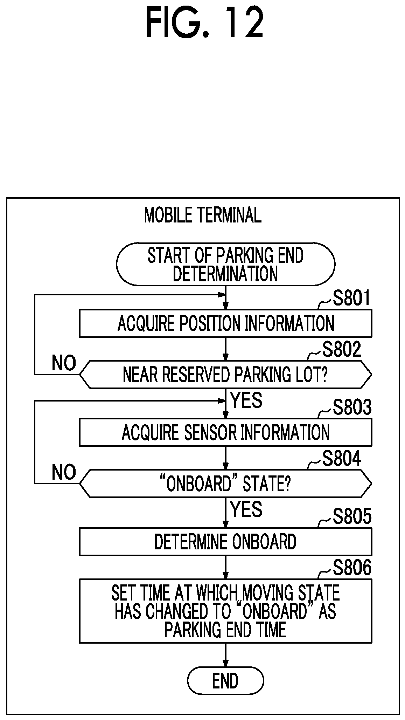

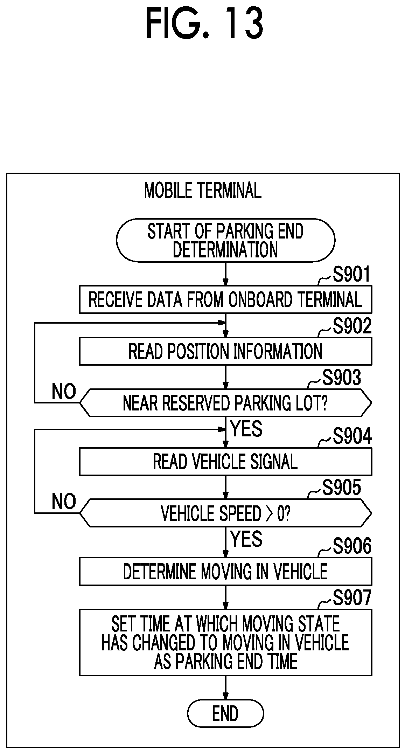

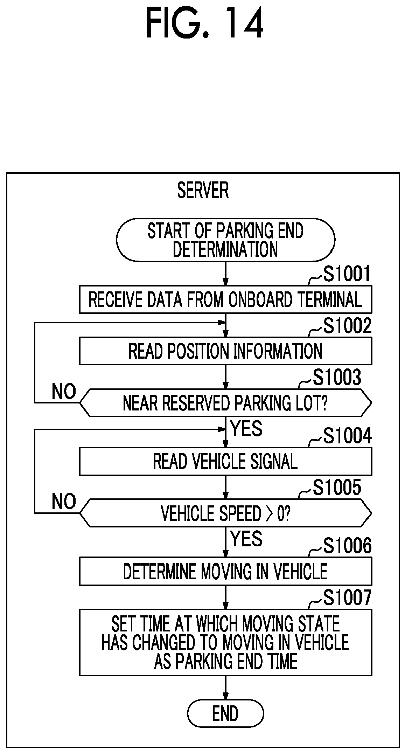

An example of the parking end determination (Step S601) illustrated in FIG. 10 will be described below with reference to FIGS. 12 to 14. FIG. 12 illustrates a process flow when the process is performed by the mobile terminal 20, FIG. 13 illustrates a process flow when the process is performed by the mobile terminal 20 and the vehicle 30, and FIG. 14 illustrates a process flow when the process is performed by the server 10 and the vehicle 30. In the parking end determination (Step S601) process illustrated in FIG. 10, for example, the process flow illustrated in one of FIGS. 12 to 14 is performed.

The parking end determination process illustrated in FIG. 12 will be described below. First, the mobile terminal 20 of a user who approaches the vehicle 30 parked in the parking lot 40 on foot acquires position information of the host device (Step S801), and determines whether a current position is near a parking lot for which parking of the vehicle 30 has been reserved (for example, within 10 m) (Step S802). The information of the parking lot for which parking of the vehicle 30 has been reserved is acquired from the database 110 of the server 10 via the network N.

When it is determined that the current position is near the parking lot (YES in Step S802), the mobile terminal 20 acquires sensor information from the sensor 27 (Step S803), and determines whether a moving state of the user identified based on the sensor information is "onboard" (Step S804).

When it is determined that the moving state is "onboard" (that is, the moving state at the time points of S801 and S802 was a state such as "walking" other than "onboard" but has been changed to the "onboard" state thereafter) (YES in Step S804), the mobile terminal 20 determines that the user is onboard in the vehicle 30 (Step S805). Thereafter, the mobile terminal 20 sets the time at which it has been determined in Step S804 that the moving state has changed to "onboard" as the parking end time for the vehicle 30 of the user of the mobile terminal 20 (Step S806) and then the process flow illustrated in FIG. 12 ends. Information on the set parking end time is transmitted to the server 10.

As described above, according to the process flow illustrated in FIG. 12, when the current position is near the parking lot reserved by the user of the mobile terminal 20, the mobile terminal 20 sets the time at which it is determined that the moving state has changed from another state to the "onboard" state based on the sensor information from the sensor 27 as the parking end time. As a result, it is possible to more accurately identify the parking end time.

The parking end determination process illustrated in FIG. 13 will be described below. First, the mobile terminal 20 receives data including the position information and the vehicle signal of the vehicle 30 from the onboard terminal of the vehicle 30 (Step S901). The position information of the vehicle 30 is identified by the positioning function of the vehicle 30. The vehicle signal includes, for example, a vehicle speed signal.

Then, the mobile terminal 20 reads the position information of the vehicle 30 from the data received in Step S901 (Step S902) and determines whether the current position of the vehicle 30 is near (for example, within 30 m) the reserved (parked) parking lot (Step S903). The information of the parking lot in which the vehicle 30 has been parked is acquired from the database 110 of the server 10 via the network N.

When the current position is near the parking lot (YES in Step S903), the mobile terminal 20 reads the vehicle signal from the data received in Step S901 (Step S904) and determines whether the value of the vehicle speed is higher than 0 km (Step S905). When vehicle speed is higher than 0 km (YES in Step S905), the mobile terminal 20 determines that the vehicle 30 is moving (Step S906).

An arbitrary method other than using the vehicle speed may be employed as the method of determining whether the vehicle 30 is moving. For example, when a change in a predetermined period of the position of the vehicle 30 indicated by the data received from the vehicle 30 is equal to or greater than a predetermined value, it may be determined that the vehicle 30 is moving. A threshold value (for example, 20 m) may be set for a moving distance of the vehicle which can be measured as a pulse integrated value of a vehicle speed sensor and it may be determined that the vehicle is moving when the moving distance is greater than the threshold value.

Thereafter, the mobile terminal 20 sets the time at which it is has been determined in Step S906 that the vehicle is moving as the parking end time (Step S907).

As described above, according to the process flow illustrated in FIG. 13, the mobile terminal 20 sets the time at which the determination has been performed as the parking end time when it is determined that the current position is near the parking lot reserved by the user of the mobile terminal 20 and the vehicle 30 has changed to the moving state (based on the detection results from the vehicle sensor of the vehicle 30). As a result, it is possible to more accurately identify the parking end time.

The parking end determination process illustrated in FIG. 14 will be described below. The processes of Steps S1001 to S1007 are the same as Steps S901 to S907 which are performed by the mobile terminal 20 and which are illustrated in FIG. 13. Accordingly, the process flow illustrated in FIG. 14 will not be repeated.

Subsequent description with reference to FIG. 10 will be made below. After Steps S601 and S602, the server 10 receives a parking end instruction along with the user information of the mobile terminal 20, information of the parking end time of the vehicle 30 set in Step S601, and the identification information of the parking section (the parking section in which the vehicle has been parked) identified in Step S602 from the mobile terminal 20 (Step S603). The server 10 updates the parking lot use information stored in the database 110 to reflect the information of the end of parking based on the received information (Step S604).

Thereafter, the server 10 determines whether the parking end time updated in Step S604 is within the reserved time (Step S605). When it is determined that the parking end time is within the reserved time (YES in Step S605), the server 10 notifies the mobile terminal 20 of end of parking (Step S606). The mobile terminal 20 gives a notification to the user by displaying the notification on the display unit 25 or the like (Step S607), and the process flow illustrated in FIG. 10 ends. In Step S607, for example, Notification example (10) is presented via the display unit 25.

When it is determined in Step S605 that the parking end time is not within the reserved time (NO in Step S605), the server 10 notifies the mobile terminal 20 that the parking time exceeds the reserved time (Step S608). The mobile terminal 20 gives a notification to the user by displaying the notification on the display unit 25 or the like (Step S609), and the process flow illustrated in FIG. 11 ends. In Step S609, for example, Notification example (11) is presented via the display unit 25.

As described above, according to the process flow illustrated in FIG. 10, the parking management system 1 can identify a difference between the details of the registered reservation for the parking lot and the actual parking situation (the parking end time) and notify the user of the difference (that is, that the parking does not match details of the reservation).

### 3.2 Embodiment 2

Embodiment 2 is an example in which the parking management system 1 is applied to a rental parking lot in which a user does not need to reserve the parking lot at a time which the user desires to use (park a vehicle in) the parking lot.

In Embodiment 2, reservation for a parking lot in which a vehicle will be parked is not performed. Accordingly, the routine in the parking management system 1 according to Embodiment 2 is different from the routine according to Embodiment 1 which has been described above with reference to FIGS. 5 to 14, in that it is not determined whether the parking position and the parking time match the details of reservation. For example, in the process flow illustrated in FIG. 5, the determination process of Step S104 is not performed, and the process of Step S105 is performed after the process of Step S103 has been performed. In the process flow illustrated in FIG. 10, the determination process of Step S605 is not performed, and the process of Step S606 is performed after the process of Step S604 has been performed.

### 3.3 Other embodiments

While an embodiment of the invention has been described above with reference to the drawings, the scope of the invention is not limited by the embodiment. Those skilled in the art can apparently make various modifications or corrections within the range of the concept of described in the appended claims, and the modifications or corrections are included in the technical scope of the invention.

For example, in the above-mentioned embodiment, the parking determining unit 213 is included in the mobile terminal. However, the invention is not limited thereto. For example, the parking determining unit 213 may be included in the server 10. In this case, it is possible to determine start of parking and end of parking of the vehicle 30 in the parking lot 40. For example, the parking determining unit 213 can receive the position of the mobile terminal 20 identified by the positioning unit 212 of the mobile terminal 20 and the detection results from the sensor 27, and determine start of parking and end of parking of the vehicle 30 in the parking lot 40 based on the received information. In this case, when the position of the mobile terminal 20 identified by the positioning unit 212 is located in the parking lot 40 and the sensor 27 has detected that the moving state of the mobile terminal 20 has changed from the onboard (moving in a vehicle) state to a not onboard state, the parking determining unit 213 can determine that parking of the vehicle 30 has been started.

A program capable of performing the processes described in the above-mentioned embodiments can be identified as the invention. The program according to the invention can be stored in various recording mediums such as an optical disc such as a CD-ROM, a magnetic disk, and a semiconductor memory. The program can be installed or loaded in a computer by downloading the program from the recording mediums or via a communication network or the like.

## Claims

1. A parking management system (1) comprising
a mobile terminal (20) and a server, wherein
the mobile terminal includes
a user information storage unit (210) configured to store user information,
a first reception unit (211) configured to receive a signal including identification information of a parking section from a device installed in the parking section,
a time identifying unit (213) configured to identify a specific time including at least one of a parking start time and a parking end time of a vehicle (30) based on a detection result from a sensor unit, and
a transmission unit (214) configured to transmit parking information including the user information, the identification information, and the specific time to the server (10), and
the server (10) includes
a second reception unit (111) configured to receive the parking information from the mobile terminal (20), and
a parking identifying unit (113) configured to identify a user of the vehicle (30), a parking position, and the specific time based on the received parking information.

2. The parking management system (1) according to claim 1, wherein the time identifying unit (213) is configured to identify the specific time based on the detection result including vehicle information associated with whether the vehicle (30) is moving.

3. The parking management system (1) according to claim 1 or 2, wherein the sensor unit includes at least one of a vehicle speed sensor of the vehicle (30) and a shift position sensor of the vehicle (30), and the time identifying unit (213) is configured to identify the specific time based on a detection result from at least one of the vehicle speed sensor and the shift position sensor.

4. The parking management system (1) according to any one of claims 1 to 3, wherein the sensor unit includes an acceleration sensor which is included in the mobile terminal (20), and the time identifying unit (213) is configured to identify the specific time based on at least a detection result from the acceleration sensor.

5. The parking management system (1) according to any one of claims 1 to 4, wherein the parking identifying unit (113) is configured to calculate a parking fee based on the specific time.

6. A mobile terminal (20) comprising:
a user information storage unit (210) configured to store user information;
a reception unit (211) configured to receive a signal including identification information of a parking section from a device installed in the parking section; and
a time identifying unit (213) configured to identify a specific time including at least one of a parking start time and a parking end time of a vehicle (30) based on a detection result from a sensor unit.

7. The mobile terminal (20) according to claim 6, wherein the time identifying unit (213) is configured to identify the specific time based on the detection result including vehicle information associated with whether the vehicle (30) is moving.

8. The mobile terminal (20) according to claim 6 or 7, wherein the sensor unit includes at least one of a vehicle speed sensor of the vehicle (30) and a shift position sensor of the vehicle (30), and the time identifying unit (213) is configured to identify the specific time based on the detection result from at least one of the vehicle speed sensor and the shift position sensor.

9. The mobile terminal (20) according to any one of claims 6 to 8, wherein the sensor unit includes an acceleration sensor included in the mobile terminal (20), and the time identifying unit (213) is configured to identify the specific time based on at least a detection result from the acceleration sensor.

10. A parking management method comprising:
causing a mobile terminal (20) configured to store user information to receive a signal including identification information of a parking section from a device installed in the parking section; and
identifying a specific time including at least one of a parking start time and a parking end time of a vehicle (30) based on a detection result from a sensor unit.

11. The parking management method according to claim 10 further comprising:
causing the mobile terminal (20) to transmit parking information including the user information, the identification information, and the specific time to a server (10);
causing the server (10) to receive the parking information from the mobile terminal (20); and
causing the server (10) to identify a user of the vehicle (30), a parking position, and the specific time based on the received parking information.

12. The parking management method according to claim 10, wherein identifying the specific time based on the detection result includes identifying the specific time based on the detection result including vehicle information associated with whether the vehicle (30) is moving.

13. The parking management method according to claim 10, wherein identifying the specific time based on the detection result includes identifying the specific time based on a detection result from at least one of a vehicle speed sensor of the vehicle (30) and a shift position sensor of the vehicle (30), the vehicle speed sensor and the shift position sensor being included in the sensor unit.

14. The parking management method according to claim 10, wherein identifying the specific time based on the detection result includes identifying the specific time based on at least a detection result from an acceleration sensor included in the mobile terminal (20).
